# EUROPEAN PATENT SPECIFICATION

(11) **EP 0 531 333 B1**
(45) Date of publication and mention of the grant of the patent: **15.11.1995**
(21) Application number: 91909415.1
(22) Date of filing: 24.05.1991
(51) Int. Cl.: H04B 17/00

(54) **RADIO TEST LOOP FOR A RADIO TRANSCEIVER**
FUNKTESTSCHLEIFE FÜR FUNKSENDER/EMPFÄNGER
BOUCLE D'ITERATION D'ESSAI RADIO POUR UN EMETTEUR/RECEPTEUR RADIO

(30) Priority: 25.05.1990 FI 902624
(43) Date of publication of application: 17.03.1993
(73) Proprietor: NOKIA TELECOMMUNICATIONS OY, 02601 Espoo (FI)
(72) Inventor: KATISKO, Keijo, SF-90500 Oulu (FI)
(74) Representative: Tomlinson, Kerry John
(86) International application number: FI9100162
(87) International publication number: WO9119363

(56) References cited:
- GB-A- 2 056 223
- US-A- 4 048 564
- US-A- 4 918 685

## Description

The invention relates to a device for looping a radio-frequency test signal transmitted by a transmitter section in a transceiver to a receiver section for testing the transceiver.

The specifications of the European mobile telephone system GSM (Groupe Special Mobile) define a test function in which a base station tests the operation of the radio sections of its transceiver by generating a test signal which is transmitted by the transmitter section and which is looped back to the receiver section.

The object of the invention is to provide a device forming a test loop of this type.

This is achieved by means of a device of the invention which is characterized in that it comprises mixing means for converting the test signal from a transmitting frequency to a receiving frequency, the output of the mixing means being connectable to apply the test signal modulated to the receiving frequency to the receiver section during predetermined test intervals; at least one controllable oscillator means for generating local oscillator signals to the mixing means; and a control means for applying a frequency setting signal to said oscillator means before the beginning of each test interval and for monitoring the frequencies of said local oscillator signals, said control means preventing the output signal of the mixing means from being applied to the receiver section during the test interval if the frequencies of the local oscillator signals have not locked to local oscillator frequencies determined by the frequency setting signal before the beginning of the test interval.

To loop a test signal generated by the transmitter in an appropriate way to the receiver, the test signal should be converted over a duplex interval from the transmitting frequency to the receiving frequency. In the preferred embodiment of the invention, the test signal is first demodulated from the transmitting frequency to a base frequency and then modulated from the base frequency to the receiving frequency. The frequencies of the local oscillator signals of the demodulator and the modulator are set in response to a command from some other component of the transceiver, e.g. from a frequency hopping unit, separately for each test interval a little before the beginning of the test interval. In the invention, the locking of the local oscillator frequencies is monitored, and if one or both of the local oscillator frequencies have not locked before the beginning of the test interval, the feeding of the test signal to the receiver during the test interval is prevented. In this way, it is possible to avoid interference of the receiver and/or misinterpretation of the condition of the transceiver as a result of an inferior test signal. In the preferred embodiment of the invention, the feeding of the test signal is prevented by means of a separation switch positioned at the output of the device.

In the following the invention will be described in greater detail by means of exemplifying embodiments with reference to the attached drawings, in which
Figure 1 is a block diagram of a transceiver comprising a device of the invention; and
Figure 2 illustrates the principal features of the device of the invention by means of a schematic block diagram.

The purpose of the radio test unit of the invention is to enable a radio-frequency test signal generated by the transmitter section of a full duplex-type transceiver to be controlled in such a way that it is passed appropriately back to the receiver section of the same transceiver for reception and analyzing. In this way, a test loop is formed which contains at least the radio sections of the transceiver, possibly also the multiplexing means, etc. The condition and operation of the transceiver can be automatically observed by measuring the test performance and suitable properties of the received test signal passed through the test loop. In the following, the invention will be described in connection with a transceiver to be used at the base station of a cellular mobile radio telephone system, but the invention is not in any way restricted to this application.

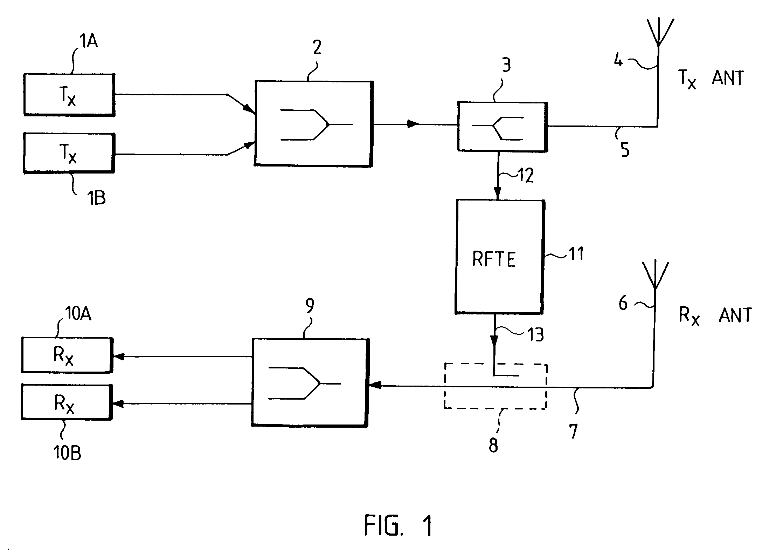

In Figure 1, the transceiver comprises at least two, preferably four, transmitter-receiver pairs 1A, 10A and 1B, 10B, respectively, whereby each pair forms one full duplex link. The outputs of the transmitter units 1A and 1B are coupled by means of a summing means 2 to a common antenna line 3 and to a common transmitting antenna 4. A receiving antenna 6 is coupled through an antenna line 7 to a branching device 9 which divides the received signal to the receiver units 10A and 10B. As used in this connection, the transmitter and receiver units refer primarily to the radio sections of the transceiver. Each transmitter and receiver unit has its own transmitting or receiving frequency, whereby the transmitting and receiving frequencies of units forming a full duplex pair, e.g., 1A and 10A, are positioned at a distance of one duplex interval from each other, e.g. 45 MHz. In addition, each frequency channel is TDMA time-division multiplexed so as to comprise several digital traffic and/or control channels. The GSM specification defines eight base frequencies for the base station, each divided into eight channel intervals.

In the preferred embodiment of the invention, a radio test unit 11 is coupled between the antenna lines 5 and 7. For this purpose, the antenna line 5 comprises a branching device 3 which branches a portion of the transmitted signal to an input 12 in the radio test unit 11. An output 13 in the radio test unit 11 is coupled to the antenna line 7 by means of a directional coupler 8 which applies an output signal from the radio test unit to the antenna line 7 in a direction towards the receiver units. Alternatively, the radio test unit can be e.g. coupled directly to the individual transmitter and receiver units.

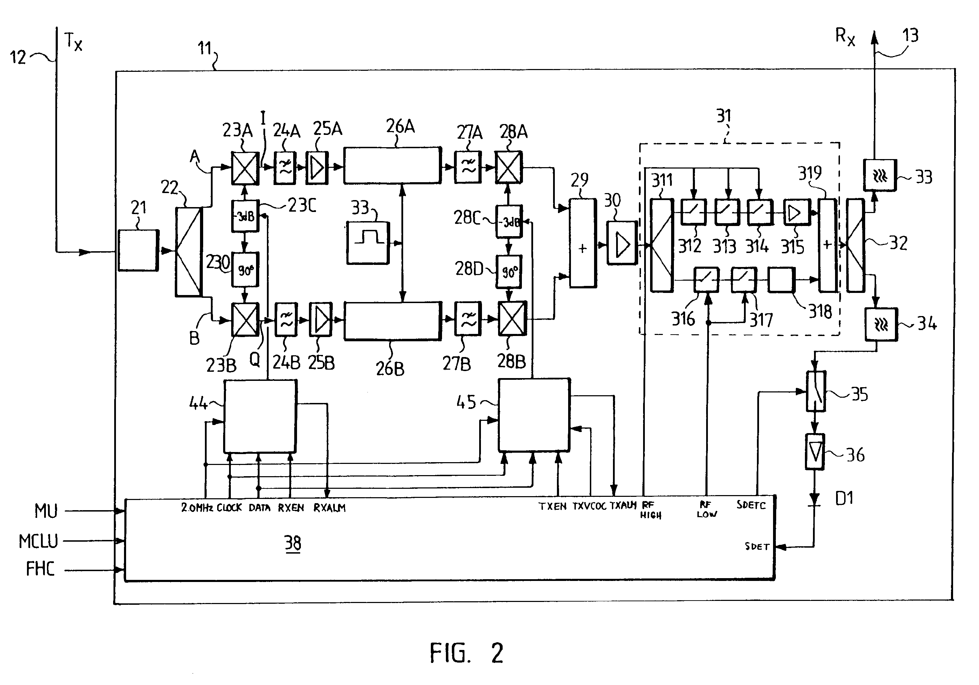

Figure 2 is a block diagram of the preferred embodiment of the radio test unit 11. From the input 12, a radio-frequency test signal, e.g. 800-1000 MHz, is applied through a fixed attenuator 21 to a branching device 22 which divides the signal to inputs A and B in a quadrature demodulator 23, whereby the signals at the inputs are mixed in mixers 23A and 23B by means of quadrature-phase local oscillator signals (a phase shift of 90 degrees) to a base frequency so as to form two quadrature-phase signals I and Q, the frequency range of which is between 0 and 100 kHz. The output signal I of the mixer 23A is applied through a lowpass filter 24A, an amplifier 25A, a delay line 26A, and a lowpass filter 27A to a mixer 28A in a quadrature modulator 28. Correspondingly, the output signal from the mixer 23B is applied through a lowpass filter 24B, an amplifier 25B, a delay line 26B and a lowpass filter 27B to a mixer 28B in the quadrature modulator 28. In the quadrature modulator 28, the signals I and Q are modulated by quadrature-phase local oscillator signals to the receiving frequency. The output signals of the mixers 28A and 28B are combined by a summing means 29 to form the final test signal, which is applied through an amplifier 30 to a switching unit 31, which under the guidance of a control unit 38 switches the test signal through it only during predetermined test intervals. From the switching unit 31, the test signal is applied to a branching device 32, which divides the signal to a signal level control branch and through a bandpass filter 33 to the output 13 of the radio test unit.

The purpose of the delay lines 26A and 26B is to delay the test signal before it is applied to the receiver for a period of time which corresponds to the time required between the transmission and reception of one line in the transceiver in question. In the GSM specifications, this time period is three channel intervals. The delay lines 26A and 26B are mutually identical. In the preferred embodiment of the invention, they are realized by a circuit based on analog sampling and charge offset, in which charges are transferred in synchronization with a clock signal generated by an oscillator 39. One suitable circuit is RD5108A, which is manufactured by Reticon Inc and in which there are 2048 charge storing means coupled in sequence. The signals I and Q are sampled during every other clock period and the samples pass from one charge storing means to another during every clock period. The magnitude of the delay is determined by the frequency of the oscillator 39, 1.216 MHz in this specific case, thus obtaining the above-mentioned delay of three channel intervals in conformity with the GSM system. The delayed signals I and Q at the outputs of the delay lines 26A and 26B are sampled analog signals, the spectra of which include the sampling frequency. This sampling frequency is removed by means of the lowpass filters 27A and 27B connected after the delay lines. Alternatively, the delay lines 26A and 26B may be realized digitally, whereby they comprise an analog-to-digital converter, a digital shift register and a digital-to-analog converter for both base-frequency signals.

In the preferred embodiment of the invention, the switching unit 31 has two primary functions: 1) to separate the test signal at the output of the modulator 28 sufficiently efficiently from the receiver between the test intervals, and 2) to set the initial level of the test signal to a desired value. Therefore, the input of the switching unit comprises a branching means 311 which divides the output signal of the amplifier 30 into two branches. The first branch comprises three switching means 312, 313 and 314 connected in series and an amplifier with constant gain, so that the gain of the branch is 15 dB. The other branch comprises two switching means 316 and 317 connected in series and a fixed attenuator 318, the attenuation of the branch being 15 dB. In the preferred embodiment of the invention, the difference in the power levels of signals passed through the different branches is thus 30 dB. The output signals of the attenuator 318 and the amplifier 315 are fed to a summing means 319, the output of which forms the output of the switching unit 31 coupled to the branching device 32. During the test interval, the control unit 38 causes the switching means 312 to 314 to be closed by a control signal RF HIGH or alternatively causes the switching means 316 to 317 to be closed by a control signal RF LOW so as to apply a receiving-frequency test signal to the receiver. Between the test intervals, the switching means of both branches are open, so that they separate the test signal from the input of the receiver. The choice of the power level of the branch and the test signal depends on whether it is the upper or lower end of the dynamic range of the receiver that is to be tested. The attenuation of open switching means within the radio frequency range has to be such that the level of a signal leaking through an open branch is at least 25 dB smaller than the signal level at the output of the selected branch. In the preferred embodiment of the invention, the switching means are realized by PIN diodes. The alternative power levels of the test signal may be formed by combinations of switches, amplifiers and attenuators different from that described above, provided that at least two alternative signal paths having different fixed attenuations or gains are achieved.

The level of the test signal leaking to the output of the radio test unit 11 is monitored by passing a portion of the output signal of the switching unit 31 by the branching device 32 to the power level control branch, in which the power level of the signal is measured. If the power level of the output signal between the test intervals exceeds a predetermined threshold level, the control unit 38 assumes that the switches are damaged or operate faultily and prevents the generation of the test signal by interrupting the supply of operating power to the oscillator 45, for instance. The power level control branch also monitors the level of the outpulled test signal during the test interval. If the power level of the test signal during the test does not exceed the predetermined threshold level, the control unit 38 assumes that the switching unit 31 has operated faultily and updates the error counter and/or disregards the loop test performed during this interval. In the preferred embodiment of the invention, the control branch comprises a series connection of the following components in the following order: a bandpass filter 34; a switching means 35 operating in its closed state as a 10 dB attenuator for protecting subsequent components; a rectifier formed by a diode D1; and a level measuring circuit, such as a comparator, positioned in the control unit 38. The control unit 38 causes the switching means 35 to open during the test intervals and close between the test intervals by a signal SDETC.

The local oscillator signals of the demodulator 23 are generated from the output signal of a frequency synthesizer 44 by feeding it to the mixer 23A with a phase shift of 0° and to the mixer 23B with a phase shift of 90°. Correspondingly, the local oscillator signals of the modulator 28 are formed by feeding the output signal of a frequency synthesizer 45 to the mixer 28A of the modulator 28 with a phase shift of 0° and to the mixer 28B with a phase shift of 90°.

During testing, the radio test unit receives a test signal from the transmitter unit 1 and transmits it further to the receiver section 2 either during every test interval within the same fixed frequency channel or, when the transceiver operates in the frequency hopping mode, by changing the physical frequency channel during each test interval. The operation of the frequency synthesizers is controlled and monitored by means of the control unit 38. During testing, the control unit 38 receives from some other component in the transceiver, e.g. from the frequency hopping unit, an absolute channel number for each test interval prior to the beginning of the test interval. Thereafter the control unit 38 generates command data from this absolute channel number for the synthesizers 44 and 45, on the basis of which data the output signals of the synthesizers are locked to a frequency corresponding to each particular channel. In the preferred embodiment of the invention, in which each frequency channel has eight channel intervals, the command data is applied to the synthesizers approximately 4ms, i.e. 7 intervals, before the test interval. In this way, it is ensured that the synthesizers 44 and 45 have a setting time of at least 3 ms before the test interval. About 0.5 ms before the beginning of the test interval, the control unit 38 monitors the states of alarm signals RXALM and TXALM of the synthesizers, which signals indicate whether the synthesizers 44 and 45 have locked or not. If both synthesizers have locked before the beginning of the test interval, the control unit 38 controls the switching unit 31 so that it connects the test signal to the output 13 for the test interval. If only one or neither one of the synthesizers 44 and 45 has locked before the beginning of the test interval, the control unit 38 does not close the switches of the switching unit 31 and the test signal will not be applied to the output 13, so that the interference of the receiver is prevented.

The control unit 38 contains several error counters for monitoring the operation of the radio test unit. Error counters to be updated include a frequency hopping command counter, synthesizer counters, switching unit counters and a counter for test intervals lost due to an error in the test unit during testing.

The correctness of the received channel number commands is controlled by means of the frequency hopping command counter. The control unit 38 receives the channel numbers from the frequency hopping unit of the transceiver in duplex form and checks that both channel numbers are identical and that they have the right parity. If this is not the case, the control unit updates the frequency hopping counter and does not generate command data to the synthesizers 44 and 45. In this way, the test interval in question is disregarded in the radio test unit and the counter for lost intervals is incremented.

A separate synthesizer counter is provided for each synthesizer, which counter is incremented if the synthesizer is not locked before the test interval and the test interval is disregarded. If the reading of the synthesizer counters exceeds a predetermined threshold value, the operation of the radio test unit stops wholly.

The switching unit counter is incremented if it is found out that the switches of the switching unit 31 have not closed or opened at the proper time during testing.

The figures and the description related to them are only intended to illustrate the present invention. In its details, the device of the invention may vary within the attached claims. For example, the conversion of the test signal from the transmitting to the receiving frequency can be carried out by means of techniques other than those described above.

## Claims

1. Device for looping a radio-frequency test signal transmitted by a transmitter section (1A, 1B) in a transceiver to a receiver section (10A, 10B) for testing the transceiver, **characterized** in that the device comprises
mixing means (23, 28) for converting the test signal from a transmitting frequency to a receiving frequency, the output of the mixing means being connectable to apply the test signal modulated to the receiving frequency to the receiver section (10A, 10B) during predetermined test intervals;
at least one controllable oscillator means (44, 45) for generating local oscillator signals to the mixing means (23, 28); and
a control means (38) for applying a frequency setting signal to said oscillator means (44, 45) before the beginning of each test interval and for monitoring the frequencies of said local oscillator signals, said control means (38) preventing the output signal of the mixing means (23, 28) from being applied to the receiver section (10A, 10B) during the test interval if the frequencies of the local oscillator signals have not locked to local oscillator frequencies determined by the frequency setting signal before the beginning of the test interval.

2. Device according to claim 1, **characterized** in that the mixing means comprise
a demodulating means (23) having its input side connected to receive said transmitting-frequency test signal;
a modulating means (28) having its input side connected to the output side of the demodulating means (23) and the output of which forms the output of the mixing means.

3. Device according to claim 2, **characterized** in that a switching unit (31) is connected to the output of the modulating means (28), the switching unit being controlled by said control means (38).

4. Device according to claim 1, 2 or 3, **characterized** in that the oscillator means (44, 45) are frequency synthesizers.

5. Device according to any of the preceding claims, **characterized** in that the device is connected between a transmitting antenna line (5) and a receiving antenna line (7) of the transceiver.

6. Device according to any of the preceding claims, **characterized** in that delay means (26A, 26B) are provided between the demodulating means (23) and the modulating means (28) for delaying the test signal for a period of time corresponding to the time difference required between the transmission and reception of the transceiver.

7. Device according to any of the preceding claims, **characterized** in that the control means (38) comprises an error counter which is incremented whenever either one of the local oscillator signals is not locked to the preset value.

## Patentansprüche

1. Vorrichtung zur Schleifenführung eines HF-Testsignals, das von einem Senderbereich (1A, 1B) in einem Sende-Empfangs-Gerät zu einem Empfängerbereich (10A, 10B) übertragen wird, um das Sende-Empfangs-Gerät zu testen,
dadurch gekennzeichnet,
daß die Vorrichtung folgendes aufweist:
- eine Mischeinrichtung (23, 28), um das Testsignal von einer Sendefrequenz in eine Empfangsfrequenz umzuwandeln, wobei der Ausgang der Mischeinrichtung so anschließbar ist, daß das auf die Empfangsfrequenz modulierte Testsignal während vorbestimmter Testintervalle an den Empfängerbereich (10A, 10B) angelegt wird;
- wenigstens eine steuerbare Oszillatoreinrichtung (44, 45), um Überlagerungsoszillatorsignale für die Mischeinrichtung (23, 28) zu erzeugen; und
- eine Steuereinrichtung (38), um an die Oszillatoreinrichtungen (44, 45) ein Frequenzeinstellsignal vor dem Beginn jedes Testintervalls anzulegen und um die Frequenzen der Überlagerungsoszillatorsignale zu überwachen, wobei die Steuereinrichtung (38) das Anlegen des Ausgangssignals der Mischeinrichtung (23, 28) an den Empfängerteil (10A, 10B) während des Testintervalls verhindert, wenn die Frequenzen der Überlagerungsoszillatorsignale sich nicht vor dem Beginn des Testintervalls auf Überlagerungsoszillatorfrequenzen aufgeschaltet haben, die durch das Frequenzeinstellsignal bestimmt sind.

2. Vorrichtung nach Anspruch 1,
dadurch gekennzeichnet,
daß die Mischeinrichtung folgendes aufweist:
- eine Demodulatoreinrichtung (23), deren Eingangsseite so angeschlossen ist, daß sie das Sendefrequenz-Testsignal empfängt;
- eine Modulatoreinrichtung (28), deren Eingangsseite an die Ausgangsseite der Demodulatoreinrichtung (23) angeschlossen ist und deren Ausgang den Ausgang der Mischeinrichtung bildet.

3. Vorrichtung nach Anspruch 2,
dadurch gekennzeichnet,
daß eine Schalteinheit (31) an den Ausgang der Modulatoreinrichtung (28) angeschlossen ist, wobei die Schalteinheit von der Steuereinrichtung (38) gesteuert wird.

4. Vorrichtung nach Anspruch 1, 2 oder 3,
dadurch gekennzeichnet,
daß die Oszillatoreinrichtungen (44, 45) Frequenzsynthetisierer sind.

5. Vorrichtung nach einem der vorhergehenden Ansprüche,
dadurch gekennzeichnet,
daß die Vorrichtung zwischen eine Sendeantennenleitung (5) und eine Empfangsantennenleitung (7) des Sende-Empfangs-Geräts geschaltet ist.

6. Vorrichtung nach einem der vorhergehenden Ansprüche,
dadurch gekennzeichnet,
daß zwischen der Demodulatoreinrichtung (23) und der Modulatoreinrichtung (28) Verzögerungseinrichtungen (26A, 26B) vorgesehen sind, um das Testsignal für eine Zeitspanne zu verzögern, die der zeitlichen Differenz entspricht, die zwischen dem Senden und dem Empfangen des Sende-Empfangs-Geräts benötigt wird.

7. Vorrichtung nach einem der vorhergehenden Ansprüche,
dadurch gekennzeichnet,
daß die Steuereinrichtung (38) einen Fehlerzähler aufweist, der jedesmal dann, wenn eines der Überlagerungsoszillatorsignale nicht auf den vorgegebenen Wert aufgeschaltet wird, inkrementiert wird.

## Revendications

1. Dispositif pour mettre en boucle un signal de test de fréquence radio émis par la section d'émission (1A, 1B) d'un émetteur-récepteur vers une section de réception (10A, 10B) en vue de tester l'émetteur-récepteur,
caractérisé en ce que le dispositif comprend :
- des moyens mélangeurs (23, 28) pour convertir le signal de test d'une fréquence d'émission en une fréquence de réception, la sortie des moyens mélangeurs étant connectable pour appliquer le signal de test modulé à la fréquence de reception à la section de réception (10A, 10B) pendant des intervalles de test prédéterminés,
- au moins un moyen d'oscillateur commandable (44, 45) pour engendrer des signaux d'oscillateur local vers les moyens mélangeurs (23, 28), et
- un moyen de commande (38) pour appliquer un signal d'établissement de fréquence auxdits moyens d'oscillateur (44, 45) avant le début de chaque intervalle de test et pour surveiller les fréquences desdits signaux d'oscillateur local, lesdits moyens de commande (38) empêchant que le signal de sortie des moyens mélangeurs (23, 28) soit appliqué à la section de réception (10A, 10B) au cours de l'intervalle de test si les fréquences des signaux de l'oscillateur local n'ont pas été verrouillés à des fréquences d'oscillateur local déterminées par le signal d'établissement des fréquences avant le début de l'intervalle de test.

2. Dispositif selon la revendication 1,
caractérisé en ce que les moyens mélangeurs comprennent
- un moyen de démodulation (23) dont l'entrée est reliée pour recevoir ledit signal de test de la fréquence d'émission,
- un moyen de modulation (28) dont l'entrée est reliée à la sortie du moyen de démodulation (23) et dont la sortie constitue la sortie des moyens mélangeurs.

3. Dispositif selon la revendication 2,
caractérisé en ce qu'une unité de commutation (31) est reliée à la sortie du moyen de modulation (28), cette unité de commutation étant commandée par ledit moyen de commande (38).

4. Dispositif selon la revendication 1, 2 ou 3,
caractérisé en ce que les moyens d'oscillateur (44, 45) sont des synthétiseurs de fréquence.

5. Dispositif selon l'une quelconque des revendications précédentes,
caractérisé en ce que le dispositif est monté entre une ligne d'antenne d'émission (5) et une ligne d'antenne de réception (7) de l'émetteur-récepteur.

6. Dispositif selon l'une quelconque des revendications précédentes,
caractérisé en ce que des moyens de temporisation (26A, 26B) sont prévus entre le moyen de démodulation (23) et le moyen de modulation (28) pour retarder le signal d'essai d'une période de temps correspondant à la différence de temps nécessaire entre l'émission et la réception de l'émetteur-récepteur.

7. Dispositif selon l'une quelconque des revendication précédentes,
caractérisé en ce que le moyen de commande (38) comprend un compteur d'erreurs qui est incrémenté chaque fois que l'un quelconque des signaux de l'oscillateur local n'est pas verrouillé à la valeur prédéterminée.
